# EUROPEAN PATENT SPECIFICATION

(11) **EP 1 000 072 B1**
(45) Date of publication and mention of the grant of the patent: **19.02.2003**
(21) Application number: 98937292.5
(22) Date of filing: 31.07.1998
(51) Int. Cl.: C07F 9/645, C07F 9/40

(54) **PROCESS FOR THE PREPARATION OF [2-((8,9)- DIOXO-2,6-DIAZABICYCLO [5.2.0]-NON-1(7)-EN-2-YL)-ETHYL] PHOSPHONIC ACID**
VERFAHREN ZUR HERSTELLUNG VON [2-((8,9-DIOXO-2,6-DIAZABICYCLO[5.2.0.]NON-1(7)-EN-2-YL)ETHYL]PHOSPHONSÄURE
PROCEDE DE PREPARATION DE L'ACIDE [2-((8,9)-DIOXO-2,6-DIAZABICYCLO [5.2.0]NON-1(7)-ENE-2-YL)ETHYL] PHOSPHONIQUE

(30) Priority: 01.08.1997 US 905091
(43) Date of publication of application: 17.05.2000
(73) Proprietor: Wyeth, Madison, New Jersey 07940-0874 (US)
(72) Inventor: ASSELIN, Andre, Alfred, Mahwah, NJ 07430 (US); KINNEY, William, Alvin, Richboro, PA 18954 (US); SCHMID, Jean, Chester, NY 10918 (US)
(74) Representative: Wileman, David Francis Dr.
(86) International application number: US9815841
(87) International publication number: WO99006417

(56) References cited:
- EP-A- 0 496 561

## Description

This invention relates to a process for the preparation of the formula **I** compound [2-((8,9)-dioxo-2,6-diazabicyclo[5.2.0]-non-1(7)-en-2-yl)ethyl]phosphonic acid, a NMDA antagonist useful as an anticonvulsant and neuroprotectant in situations involving excess release of excitatory amino acids.

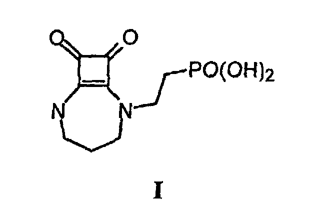

The formula **I** compound and a process for its preparation are disclosed in US 5,168,103. In the disclosed process, 3-aminopropyl carbamic acid phenylmethyl ester is reacted with 2-oxoethylphosphoric acid dialkyl ester and sodium cyanoborohydride to obtain the intermediate[3-[[2-(dialkoxyphosphinyl)ethyl]amino]propyl]carbamic acid phenylmethyl ester (a) in 36% yield. Reaction of (a) with a 3,4-dialkoxy (or 3,4-diarylalkoxy)-cyclobut-3-en-1,2-dione such as 3,4-diethoxycyclobut-3-en-1,2-dione yields 3-[[2-(dialkoxyphosphoryl)ethyl]-(2-alkoxy-3,4-dioxo-1-cyclobuten-1-yl)amino] propyl-carbamic acid phenylmethyl ester (b) in 89% yield. Removal of the benzyloxycarbonyl protecting group and cyclization of (b) to [2-((8,9)-dioxo-2,6-diazabicyclo[5.2.0]-non-1(7)-en-2-yl)ethyl]phosphonic acid dialkyl ester (c) is accomplished in 62% yield by treating (b) with 10% palladium on carbon and 1,4-cyclohexadiene. Treatment of the bicyclic diester (c) with bromotrimethylsilane affords [2-((8,9)-dioxo-2,6-diazabicyclo-[5.2.0]-non-1(7)-en-2-yl)ethyl]phosphonic acid **(I)** in 78% yield. The overall yield for the sequence of reactions is 15.5%.

In the processes of the present invention, as illustrated in Step 2 of Scheme 1 below, a 3-aminopropyl carbamic acid dimethylethyl ester (IV) is, instead reacted with a dialkyl vinylphosphonate (V) to obtain the N-[3-(t-butyloxy-carbonylamino)propyl]-2-aminoethylphosphonic acid dialkyl ester (VI). Further improvements provided by the present invention over the process of US 5,168,103 as noted below, increase the overall yield to produce I to 38.8%.

One aspect of this invention is a process for the preparation of [2-((8,9)-dioxo-2,6-diazabicyclo[5.2.0]non-1(7)-en-2-yl)ethyl]phosphonic acid which comprises the following steps:
a) reacting a vinylphosphonate di-C₁-C₆ alkyl ester with 3-aminopropyl carbamic acid 1,1-dimethylethyl ester to give a di-C₁-C₆alkyl ester of N-[3-(t-butoxycarbonyl amino)propyl]-2-aminoethyl phosphonic acid,
b) reacting a 3,4-di-C₁-C₄alkoxycyclobut-3-en-1,2-dione with a di-C₁-C₆ alkyl ester of N-[3-(t-butyloxycarbonylamino)propyl]-2-aminoethylphosphonic acid, to give 3-[[2-(di-C₁-C₆alkoxyphosphoryl)ethyl]-(2-C₁-C₆alkoxy-3,4-dioxo-1-cyclobuten-1-yl)amino] propyl-carbamic acid tert-butyl ester;
c) deprotecting the 3-amino group of the product of step (b);
d) cyclizing the product of step (c) to form the bicyclic intermediate [2-((8,9)-dioxo-2,6-diazabicyclo[5.2.0]non-1(7)-en-2-yl)ethyl]phosphonic acid di-C₁-C₆alkyl ester; and
e) converting the di-C₁-C₆alkyl ester of step (d) to the phosphonic acid product.

The preferred vinylphosphonate di-C₁-C₆alkyl ester is dimethyl vinylphosphonate or is diethyl vinylphosphonate, of which is dimethyl vinylphosphonate is most preferred.

Step (b) is preferably carried out in anhydrous methanol or ethanol at ambient temperatures (25-30°C). Steps (b), (c) and (d) are preferably run in situ. Step (c) is preferably carried out in methylene chloride at -5°C to 25°C. Step (e) is preferably carried out in methylene chloride or acetonitrile at about 20°C. The preferred 3,4-di-C₁-C₄ alkoxycyclobut-3-en-1,2-dione in step (b) is 3,4-diethoxycyclobut-3-en-1,2-dione.

In another aspect the invention provides the following compounds:
a compound which is an N-[3-(t-butyloxycarbonylamino)propyl]-2-aminoethylphosphonic acid di-C₁-C₆ alkyl ester;
a compound which is N-[3-(t-butyloxycarbonylamino)propyl]-2-aminoethylphosphonic acid diethyl ester or N-[3-(t-butyloxycarbonylamino)propyl]-2-amino methylphosphonic acid diethyl ester;
a compound which is a 3-[[2-(di- C₁-C₆ alkoxy-phosphoryl)ethyl]-(2-C₁-C₆ alkoxy-3,4-dioxocyclobut-1-enyl)amino]propylcarbamic acid tert-butyl ester where the alkoxy groups are the same or different and
a compound 3-[[2-(diethoxy-phosphoryl)ethyl]-(2-ethoxy-3,4-dioxocyclobut-1-enyl)amino]propylcarbamic acid tert-butyl ester or is 3-[[2-(diethoxy-phosphoryl)ethyl]-(2-ethoxy-3,4-dioxocyclobut-1-enyl)amino]propylcarbamic acid tert-butyl ester.

The process of the present invention is illustrated in Scheme 1 below, where "alkyl" is represented by the ethyl group and "alkoxy" is represented by the ethoxy group, and is further described as follows:

In Step 1, 1,3-diaminopropane (II) is reacted with a di-t-butylcarbonate (III) to give 3- aminopropyl carbamic acid 1,1-dimethylethyl ester (IV).

In Step 2, the carbamic acid ester IV is reacted (e.g. in anhydrous methanol at about 20°C) with a di-C₁-C₆alkyl vinylphosphonate (V), to give N-[3-(t-butyloxycarbonylamino)propyl]-2-aminoethylphosphonic acid di-C₁-C₆alkyl ester (VI). In the illustrated case where V is diethyl vinylphosphosphonate, this step provides an 80% yield. However, dimethyl vinylphosphate provides comparable yields and is preferred commercially because it is more readily available in larger quantities.

In Step 3, aminophosphonic acid di C₁-C₆alkyl ester (VI) is reacted with a 3,4-di-C₁-C₄alkoxycyclobut-3-en-1,2-dione (VII) to give a 3-[[2-(di-C₁-C₆ alkoxy phosphoryl)ethyl]-(2-C₁-C₄alkoxy-3,4-dioxo-1-cyclobuten-1-yl)amino]propyl-carbamic acid 1,1-dimethylethyl ester (VIII). In the illustrated case where alkyl refers to ethyl in both instances, this step provides a 96% yield. This step is preferably carried out in anhydrous methanol or ethanol at ambient temperatures.

In step 4, deprotection of (VIII) in trifluoro-acetic acid followed by cyclization with triethylamine as a cyclizing agent gives [2-((8,9)-dioxo-2,6-diazabicyclo[5.2.0]-non-1(7)-en-2-yl)ethyl]-phosphonic acid di-C₁-C₆alkyl ester (IX). In the illustrated case the yield of the produce IX is 58% yield. the deprotection is preferably carried out in methylene chloride at -5°C to 25°C. The cyclization is preferably carried out in methylene chloride or acetonitrile, with methylene chloride being particularly preferred, at about 20°C.

In Step 5, The phosphonic acid diethyl ester (IX) is treated with bromotrimethylsilane to give compound I in 87% yield. The overall yield for preparing [2-((8,9)-dioxo-2,6-diazabicyclo[5.2.0]-non-1(7)-en-2-yl)ethyl]phosphonic acid (I) according to the process of this invention is 38.8%, a considerable improvement over the 15.5% yield disclosed in US 5,168,103.

Steps 2, 3 and 4 are preferably done in situ.

In the reaction sequence above, the term "alkyl" means a C₁-C₆ alkyl, straight or branched, and the term "alkoxy" means a C₁-C₆ alkoxy group, except with respect to the squarate compounds VII where alkyl means methyl, ethyl or butyl. The yields refer to specific instances where "alkyl" is ethyl and "alkoxy" is ethoxy.

Advantages of the process of this invention are several fold. First, 1,3-propanediamine is mono-protected in excellent yield with di-t-butyldicarbonate, a reaction that is less hazardous than using benzylchloroformate to prepare a benzyloxycarbamate protecting group. Second, the monoprotected-1,3-propanediamine is reacted with diethyl vinylphosphonate in excellent yield without employing additional reagents such as sodium cyanoborohydride and acid, each of which is not without hazard, which were required when using diethyl 2-oxoethylphosphonate as previously disclosed. Third, the t-butyloxy-carbonyl group is removed readily with acid whereas the removal of the benzyloxycarbonyl group required the use of palladium catalyst and a hydrogen source.

The process according to this invention is outlined in the following scheme I. In this scheme, "alkyl" is represented by the ethyl group and "alkoxy" is represented by the ethoxy group.

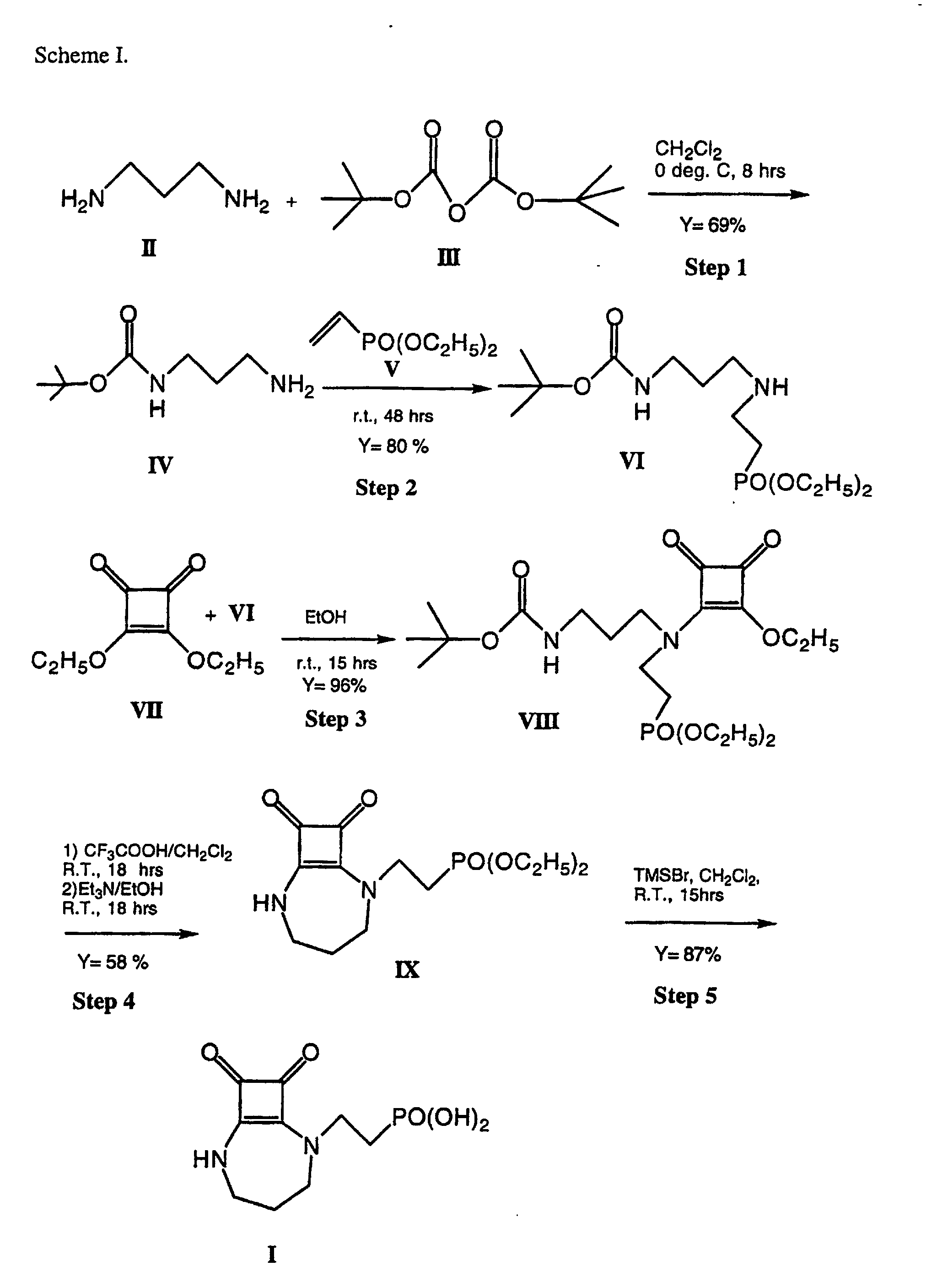

The following specific examples are included to illustrate the process of this invention and should not be construed as limiting to the process of this invention in any way. Those skilled in the art may be aware of still other procedures or modifications which may be used in an equivalent manner to perform the invention process.

### Example 1

### 3-(t-Butyloxycarbonylamino)propanamine

To a solution of 1,3-diaminopropane (500 g, 6.75 moles; Aldrich D2, 360-2) in tetrahydrofuran (1.6 l) at from -3°C to + 2°C with stirring was added dropwise a solution of di-t-butyldicarbonate (300 g, 1.375 mole; Aldrich 19, 913-3) in tetrahydrofuran (800 mL) over a period of ∼ 8 hr. The resulting white suspension was stirred at 0°C and let slowly warm to ambient temperature overnight. The reaction mixture was concentrated *in vacuo* and the residue was taken up in a mixture of ethyl acetate and saturated sodium chloride solution. The aqueous layer was extracted with ethyl acetate. The combined extracts were washed once with sat. sodium chloride, dried over magnesium sulfate and filtered to yield an oil (∼ 245 g, quantitative). The oil was suspended in water (200 mL) and cooled to 0°C to - 5°C. An aqueous solution of bromo cresol green (3 mL, 0.04% in water; Aldrich 31, 870-1) was added to result in a blue solution. With vigorous stirring (1N hydrochloric acid (1.4 L) was added dropwise to give a light blue to green/yellow colored solution (pH ∼ 5-6, pH-paper). This suspension was extracted with methylene chloride (2 x 300 mL) and the aqueous layer made basic with 2.5 n sodium hydroxide to pH ∼ 12. The basis aqueous layer was extracted with methylene chloride (5 x 300 mL) and the organic layer was washed with saturated sodium chloride solution (2 x 100 mL), dried over anhydrous potassium carbonate powder, filtered through Celite and concentrated to give the title compound as a faint bluish oil which crystallized on standing (165 g, 69%) (very hygroscopic solids).
NMR (CDCl₃, 400 MHz): 1.43 (s, 9H), 1.61 (p, 2H), 1.59 (s, 2H), 2.76 (t, 2H), 3.20 (q, 2H), 4.95 (br, 1H).

### Example 2

### N-[3-(t-Butyloxycarbonylamino)propyl]-2-aminoethylphosphonic acid diethyl ester

To a solution of 3-(t-butyloxycarbonylamino) propanamine (77 g, 0.44 mole) in methanol (500 mL) was added diethyl vinylphosphonate 97% (75 g, 0.44 mole; Aldrich 11, 613-0) under nitrogen and kept in a water bath at ∼ 20°C for 48 hr. The reaction mixture was concentrated *in vacuo* and the residue (∼ 160 g) was put on a pad of "Florisil" (3" x 6") and eluted with methylene chloride/hexane 1:1, methylene chloride and finally 10% methanol/methylene chloride to give the title compound as a colorless oil (121 g, 80%).
NMR (CDCl₃, 400 MHz): 1.32 (t, 6H), 1.43 (s, 9H), 1.65 (t, 2H), 1.80 (br, 1H), 1.97 (dt, 2H), 2.67 (t, 2H), 2.85 (dt, 2H), 3.20 (q, 2H), 4.09 (m, 4H), 5.08 (br, 1H).

### Example 3

### 3-[[2-(Diethoxy-phosphoryl)-ethyl]-(2-ethoxy-3,4-dioxocyclobut-1-enyl)amino]propylcarbamic acid tert-butyl ester

To a solution of 3,4-diethoxy-3-cyclobutene-1,2-dione (45 g, 0.265 mole; Aldrich 31,077-8) in absolute ethanol (1.2 L) under nitrogen was added dropwise a solution of N-[3-(t-butyloxycarbonylamino)propyl]-2-aminoethylphosphonic acid diethyl ester (80 g, 0.24 mole) in absolute ethanol (600 mL) and the reaction mixture was stirred at ambient temperature 15 hr. The reaction mixture was concentrated *in vacuo* and the residue was put on a pad of silica gel (6" x 4") and eluted first with a mixture of methylene chloride/hexane 1:1 to remove excessive 3,4-diethoxy-3-cyclobutene-1,2-dione and finally with 10% methanol/methylene chloride to yield the title compound after evaporation as a viscous oil (107 g, 96%).
NMR: (CDCl₃, 400 MHz): 1.34 (t, 6H), 1.43 (s, 9H), 1.46 (t, 3H), 1.80 (m, 2H), 2.12 (m, 2H), 3.14 (m, 2H), 3.49 (t, 1H), 3.66 (m, 1H), 3.73 (t, 1H), 3.90 (m, 1H), 4.10 (m, 4H), 4.74 (m, 4H), 5.05 (br, H).

### Example 4

### [2-(8,9-Dioxo-2,6-diazabicyclo[5.2.0]non-1(7)-en-2-yl)ethyl]phosphonic Acid Diethyl Ester

A solution of N-[3-(t-butoxycarbonylamino)propyl]-N-[4-ethoxy-2,3-dioxocyclobut-1-ene-1-yl]-2-aminoethylphosphonic acid diethyl ester (100 g, 0.22 mole) in methylene chloride (600 mL) was cooled in ice and treated with trifluoroacetic acid (300 mL). The reaction mixture was left to warm to ambient temperature overnight. The solution was concentrated *in vacuo* at max. 40°C and co-evaporated with toluene (2 x 500 mL) to yield a viscous oil (159.5g) which was dissolved in absolute ethanol (1.5 L) and added dropwise over eight hours to a solution of triethylamine (350 mL) in ethanol (1.5 L) and stirred for 8 hr. at room temperature. The reaction mixture was concentrated *in vacuo* to an oil which was taken up in ethyl acetate (1 L). Compound crystallized and was cooled in ice, filtered and washed with ethyl acetate and finally hexane to give the title compound as a white compound (40 g, 58%).
NMR (CDCl₃, 400 MHz): 1.34 (t, 6H), 2.06 (m, 2H), 2.20 (dt, 2H), 3.50 (m, 4H), 4.05 (m, 2H), 4.15 (m, 4H), 7.87 (br, 1H).
MS (DEI) M⁺ m/z 316.
LC analysis (column: Microsorb-MV C18, 150 x 4.6 mm; Eluent: 30/70 MeOH/0.01 M NH₄H₂PO₄ pH 4.7; Flow rate: 1 mL/min; UV detector at 210 nm;

| | | | | |
|---|---|---|---|---|
| Analysis | Calc'd. for C₁₃H₂₁N₂O₅P | C, 49.36; | H, 6.69; | N, 8.85%. |
| | Found | C, 49.47; | H, 6.74; | N, 8.77%. |

### Example 5

### [2-(8,9-Dioxo-2,6-diazabicyclo[5.2.0]non-1(7)-en-2-yl)ethyl]phosphonic Acid

Under N₂ bromotrimethylsilane (83 mL, 96.3 g, 0.63 mole; Aldrich 19,440-9) was added dropwise at a fast rate to a solution of [2-(8,9-dioxo-2,6-diazabicyclo-[5.2.0]non-1(7)-en-2-yl)ethyl]phosphonic acid diethyl ester (37.6 g, 0.12 mole) in methylene chloride (350 mL). The reaction mixture was kept in a water bath at approximately 20°C for 15 hr.. The clear solution was concentrated *in vacuo* and the foamy residue was taken up in acetone (600 mL) with vigorous shaking to result in a thin suspension. Water (50 mL, 2.78 moles) was added to give a gummy precipitate which solidified instantly. The suspension was shaken vigorously for 10 minutes, filtered and washed with acetone to give a yellow solid compound. The solids were taken up in boiling water (450 mL) and the hot solution was filtered through a fluted filter paper to remove a small amount of insoluble material. The clear aqueous solution was cooled in ice and crystallization began at once. The thick crystalline mass was diluted by slow addition of acetone (800 mL), kept cold for 1 hr, filtered and washed with acetone and then hexane to give the title compound as a pale yellow solid (20.2 g). A second crop from the mother liquor (100% purity by LC) yielded an additional amount (6.5 g) for a total yield of 87%.
NMR (DMSO-d₆, 400 Mhz): 1.90 (m, 4H), 3.25 (m, 2H), 3.36 (m, 2H), 3.84 (q, 2H), 8.45 (s, 1H).
LC analysis: (Column: Nova Pak C18, 300 x 3.9 mm; Eluent: 20/80 MeOH/0.005 M
Pic A; Flowrate: 1 mL/min; UV detectors at 210 nm).

| | | | | |
|---|---|---|---|---|
| Analysis | Calc'd. for C₉H₁₃N₂O₅P·0.1 H₂O | C, 41.26; | H, 5.08; | N, 10.69%; |
| | Found | C, 41.17; | H, 5.04; | N, 10.42%; |

Karl-Fischer analysis: 0.55% H₂O;
MS: -FAB [M-H]⁻ m/z 259.

### Example 6

### Preparation of 3-(t-Butoxycarbonylamino)propanamine ("t-BOC-Propanamine")

A solution of di-t-butyldicarbonate (0.50 Kg, 2.29 moles) in methanol was added to an excess (5 equivalents) of 1,3-diaminopropane (0.83 Kg, 11.2 moles) over a 4 hour period at 25-30°C. The product 1,3-Diaminopropane t-butoxycarbonate was filtered off and the methanol removed by vacuum distillation. The residual oil was taken into ethyl acetate, washed with brine, water added, and the pH adjusted to 5.5. The layers were separated and the aqueous phase made strongly alkaline. The alkaline aqueous solution was extracted six times with toluene. The combined toluene extracts were dried over sodium sulfate and concentrated to afford t-BOC-propanamine (0.365 Kg) in a 77.4% yield, 11.5% total impurities.

### Example 7

### Preparation of [2-(8,9-Dioxo-2,6-diazabicyclo[5.2.0]non-1(7)-en-2-yl]phosphonic acid, dimethyl ester ("Dimethyl Phosphonate Ester")

### A. Formation of t-BOC-phosphonate Dimethyl Ester

A solution of t-BOC-Propanamine, 98% (0.67 Kg, 3.77 moles) and dimethylvinylphosphonate (0.59 Kg, 4.12 moles) in anhydrous methanol (2.7 L) were stirred at room temperature for 2 days to give a solution of the Dimethyl Phosphonate Ester product.

### B. Formation of t-BOC-Phosphonate Dimethyl Ethyl Squarate

The Dimethyl Phosphonate Ester product solution in A was then added to a solution of 3,4-diethoxy-3-cyclobutene-1,2-dione ("Ethyl Squarate") (0.55 Kg, 3.23 moles) in anhydrous methanol (3.24 L) over a six hour period. After stirring at 0-5°C overnight the reaction mixture was concentrated by distillation. Toluene (1 L) added and the distillation repeated to a final volume of 1.6 L 3-[[2-(Diethoxy-phosphoryl)-ethyl]-(2-ethoxy-3,4-dioxocyclobut-1-enyl)amino]propylcarbamic acid tert-butyl ester ("t-BOC-Phosphonate Dimethyl Ethyl Squarate").

### C. Formation of Deprotected Phosphonate Dimethyl Ethyl Squarate

To the product solution of t-BOC-Phosphonate Dimethyl Ethyl Squarate from B was added toluene (5.0 L) at 0-5°C, followed by trifluoroacetic acid (4.71 Kg, 41.31 moles) over 0.25-5 hrs. while keeping the temperature under 15°C. After stirring for 4 hours at room temperature, the reaction mixture was concentrated to afford the crude deprotected Phosphonate Dimethyl Ethyl Squarate.

### D. Formation of Dimethyl Phosphonate Ester

Anhydrous methanol (4.5 L) was added to the reaction product concentrate from C, and the resulting solution was added over a 6 hour period to a solution of excess triethylamine (2.9 Kg, 28.66 moles) in anhydrous methanol at room temperature. the resulting mixture was concentrated, followed by the addition of ethyl acetate which precipitated out the titled Dimethyl Phosphonate Ester product. After filtration and washing of the cake with cold ethyl acetate a 50.4% yield of [2-(8,9-Dioxo-2,6-diazabicyclo[5.2.0]non-1(7)-en-2-yl)ethyl]phosphonic Acid Diethyl Ester ("Dimethyl Phosphonate Ester") (0.56 Kg), 97.6% strength, was obtained, single impurity of 1.05% and total impurities of 1.76%.

### Example 8

### Preparation and Purification of [2-(8,9-Dioxo-2,6-diazabicyclo[5.2.0]non-1(7)-en-2-yl)ethyl]phosphonic Acid

Bromotrimethylsilane, 97.6% (0.55 Kg, 3.59 moles) was added at room temperature to a stirring suspension of dimethyl phosphonate ester (0.46 Kg, 1.56 moles) in acetonitrile (4.1 L). The resulting solution is then added to stirring acetonitrile-water. The titled phosphonic acid precipitated out of solution as cream-colored solids. The slurry was cooled to 0°C and the product collected by filtration. The wet cake was stirred in water and 30% NaOH added to a pH of 13. A solution formed. Hydrochloric acid was added to a pH of 1.0. The titled phosphonic acid precipitated out of solution as white-colored solids. The product was collected on a Buchner and washed with ice-cold water. The titled phosphonic acid was then purified by recrystallization from water. The wet cake was dissolved in 12 parts water, filtered through paper on a Buchner, and the filtrate concentrated. Upon cooling The titled phosphonic acid crystallized out of solution. The slurry was cooled to 0°C and collected on a Buchner. The cake was washed with water, dried in a vacuum oven at 65°C to afford the titled phosphonic acid, purified in an 86 % yield, 99.9 % strength, single impurity, 0.05 %, total impurities, 0.13 %.

## Claims

1. A process for the preparation of [2-((8,9)-dioxo-2,6-diazabicyclo[5.2.0]non-1(7)-en-2-yl)ethyl]phosphonic acid which comprises the following steps:
a) reacting a vinylphosphonate di-C₁-C₆alkyl ester with 3-aminopropyl carbamic acid 1,1-dimethylethyl ester to give a di-C₁-C₆alkyl ester of N-[3-(t-butyloxycarbonylamino)propyl]-2-aminoethylphosphonic acid;
b) reacting 3,4-di- C₁-C₄alkoxycyclobut-3-en-1,2-dione with the di-C₁-C₆ alkyl ester of N-[3-(t-butyloxycarbonylamino)propyl]-2-aminoethylphosphonic acid from step a) to give 3-[[2-(di- C₁-C₆alkoxyphosphoryl)ethyl]-(2-C₁-C₆alkoxy-3,4-dioxo-1-cyclobuten-1-yl)amino]propyl-carbamic acid tert-butyl ester;
c) deprotecting the 3-amino group of the product of step (b);
d) cyclizing the product of step (c) to form the bicyclic intermediate [2-((8,9)-dioxo-2,6-diazabicyclo[5.2.0]non-1(7)-en-2-yl)ethyl]phosphonic acid di-C₁-C₆alkyl ester;
and
e) converting the di- C₁-C₆ alkyl ester of step (c) to the phosphonic acid product.

2. A process according to claim 1 wherein the reactions of steps (b), (c) and (d) are carried out in situ.

3. A process according to claim 1 or claim 2 wherein the reaction of step (b) is carried out in anhydrous methanol or ethanol at ambient temperature.

4. A process according to any one of claims 1 to 3 wherein the reaction of step (c) is carried out in methylene chloride at -5°C to 25°C.

5. A process according to any one of claims 1 to 4 wherein the reaction of step (e) is carried out in methylene chloride or acetonitrile at about 20 °C.

6. A process according to any one of claims 1 to 5 wherein the 3,4-di C₁-C₄ alkoxycyclobut-3-en-1,2-dione is 3,4-diethoxycyclobut-3-en-1,2-dione.

7. A process for the preparation of N-[3-(t-butyloxycarbonylamino)propyl]-2-aminoethylphosphonic acid di C₁-C₆ alkyl ester which comprises reacting a vinylphosphonate di-C₁-C₆ alkyl ester with 3-aminopropyl carbamic acid 1,1-dimethylethyl ester.

8. A process according to anyone of claims 1 to 7 wherein the reaction with the vinylphosphonate di C₁-C₆ alkyl ester is carried out in anhydrous methanol at about 20°C.

9. A process according to any one of claims 1 to 8 wherein the vinylphosphonate di C₁-C₆ alkyl ester is dimethyl vinylphosphonate or diethyl vinylphosphonate.

10. A process according to anyone of claims 1 to 8 wherein the N-[3-(t-butyloxycarbonylamino)propyl]-2-aminoethylphosphonic acid di-C₁-C₆alkyl ester is N-[3-(t-butyloxycarbonylamino)propyl]-2-aminoethylphosphonic acid dimethyl ester or N-[3-(t-butyloxycarbonylamino)propyl]-2-aminoethylphosphonic acid diethyl ester

11. A compound which is a N-[3-(t-butyloxycarbonylamino)propyl]-2-aminoethylphosphonic acid di C₁-C₆ alkyl ester.

12. The compound N-[3-(t-butyloxycarbonylamino)propyl]-2-aminoethylphosphonic acid dimethyl ester or the compound N-[3-(t-butyloxycarbonylamino)propyl]-2-aminoethylphosphonic acid diethyl ester.

13. A compound which is a 3-[[2-(di C₁-C₆ alkoxy-phosphoryl)ethyl]-(2-C₁-C₆ alkoxy-3,4-dioxocyclobut-1-enyl)amino]propylcarbamic acid tert-butyl ester, where the alkoxy groups are the same or different.

14. The compound 3-[[2-(diethoxy-phosphoryl)ethyl]-(2-ethoxy-3,4-dioxocyclobut-1-enyl)amino]propylcarbamic acid tert-butyl ester.

## Patentansprüche

1. Verfahren zur Herstellung von [2-((8,9)-Dioxo-2,6-diazabicyclo[5.2.0]non-1(7)-en-2-yl)ethyl]phosphonsäure, welches die folgenden Schritte umfasst:
a) Umsetzen eines Vinylphosphonat-di-C₁-C₆-alkylesters mit 3-Aminopropyl-carbaminsäure-1,1-dimethylethylester, um einen Di-C₁-C₆-alkylester von N-[3-(t-Butyloxy-carbonylamino)propyl]-2-aminoethylphosphonsäure zu ergeben;
b) Umsetzen von 3,4-Di-C₁-C₄-alkoxycyclobut-3-en-1,2-dion mit dem Di-C₁-C₆-alkylester von N-[3-(t-Butyloxycarbonylamino)-propyl]-2-aminoethylphosphonsäure von Schritt a), um 3-[[2-Di-C₁-C₆-alkoxyphosphoryl)ethyl]-(2-C₁-C₆-alkoxy-3,4-dioxo-1-cyclobuten-1-yl)amino]propyl-carbaminsäure-tert-butylester zu ergeben;
c) Entschützen der 3-Aminogruppe des Produkts von Schritt (b) ;
d) Cyclisieren des Produkts von Schritt (c), um die bicyclische Zwischenverbindung [2-((8,9)-Dioxo-2,6-diazabicyclo-[5.2.0]non-1(7)-en-2-yl)ethyl]phosphonsäure-di-C₁-C₆-alkylester zu bilden; und
e) Umwandeln des Di-C₁-C₆-alkylesters von Schritt (c) in das Phosphonsäureprodukt.

2. Verfahren gemäß Anspruch 1, wobei die Umsetzungen der Schritte (b), (c) und (d) in situ durchgeführt werden.

3. Verfahren gemäß Anspruch 1 oder Anspruch 2, wobei die Umsetzung von Schritt (b) in wasserfreiem Methanol oder Ethanol bei Umgebungstemperatur durchgeführt wird.

4. Verfahren gemäß einem der Ansprüche 1 bis 3, wobei die Umsetzung von Schritt (c) in Methylenchlorid bei -5°C bis 25°C durchgeführt wird.

5. Verfahren gemäß einem der Ansprüche 1 bis 4, wobei die Umsetzung von Schritt (e) in Methylenchlorid oder Acetonitril bei etwa 20°C durchgeführt wird.

6. Verfahren gemäß einem der Ansprüche 1 bis 5, wobei das 3,4-Di-C₁-C₄-alkoxycyclobut-3-en-1,2-dion 3,4-Diethoxycyclobut-3-en-1,2-dion ist.

7. Verfahren zur Herstellung von N-[3-(t-Butyloxycarbonylamino)propyl]-2-aminoethylphosphonsäure-di-C₁-C₆-alkylester, welches Umsetzen eines Vinylphosphonat-di-C₁-C₆-alkylesters mit 3-Aminopropylcarbaminsäure-1,1-dimethylethylester umfasst.

8. Verfahren gemäß einem der Ansprüche 1 bis 7, wobei die Umsetzung mit dem Vinylphosphonat-di-C₁-C₆-alkylester in wasserfreiem Methanol bei etwa 20°C durchgeführt wird.

9. Verfahren gemäß einem der Ansprüche 1 bis 8, wobei der Vinylphosphonat-di-C₁-C₆-alkylester Dimethyl-vinylphosphonat oder Diethyl-vinylphosphonat ist.

10. Verfahren gemäß einem der Ansprüche 1 bis 8, wobei der N-[3-(t-Butyloxycarbonylamino)propyl]-2-aminoethylphosphonsäure-di-C₁-C₆-alkylester N-[3-(t-Butyloxycarbonylamino)propyl]-2-aminoethylphosphonsäure-dimethylester oder N-[3-(t-Butyloxycarbonylamino)propyl]-2-aminoethylphosphonsäure-diethylester ist.

11. verbindung, welche ein N-[3-(t-Butyloxycarbonylamino)propyl]-2-aminoethylphosphonsäure-di-C₁-C₆-alkylester ist.

12. Verbindung N-[3-(t-Butyloxycarbonylamino)propyl]-2-aminoethylphosphonsäure-dimethylester oder die Verbindung N-[3-(t-Butyloxycarbonylamino)propyl-2-aminoethylphosphonsäure-diethylester.

13. Verbindung, welche ein 3-[[2-(Di-C₁-C₆-alkoxy-phosphoryl)-ethyl]-(2-C₁-C₆-alkoxy-3,4-dioxocyclobut-1-enyl)amino]propylcarbaminsäure-tert-butylester ist, wobei die Alkoxygruppen gleich oder unterschiedlich sind.

14. Verbindung 3-[[2-(Diethoxy-phosphoryl)ethyl]-(2-ethoxy-3,4-dioxocyclobut-1-enyl)amino]propylcarbaminsäure-tert-butylester.

## Revendications

1. Procédé de préparation de l'acide [2-((8,9)-dioxo-2,6-diazabicyclo[5.2.0]non-1(7)-én-2-yl)-éthyl]phosphonique, qui comprend les étapes suivantes :
a) on fait réagir un ester di(alkylique en C₁-C₆) de phosphonate de vinyle avec un ester 1,1-diméthyléthylique de l'acide 3-aminopropyl carbamique pour donner un ester di(alkylique en C₁-C₆) de l'acide N-[3-(t-butyloxycarbonylamino)-propyl]-2-aminoéthylphosphonique;
b) on fait réagir de la 3,4-di(alcoxy en C₁-C₄)cyclobut-3-éne-1,2-dione avec l'ester di(alkylique en C₁-C₆) de l'acide N-[3-(t-butyloxycarbonylamino)propyl]-2-aminoéthylphosphonique de l'étape a) pour donner l'ester tert-butylique de l'acide 3-[[2-(di(alcoxy en C₁-C₆)phosphoryl)éthyl]-(2- (alcoxy en C₁-C₆)-3,4-dioxo-1-cyclobutén-1-yl)amino]propyl-carbamique;
c) on déprotège le groupe 3-amino du produit de l'étape b);
d) on cyclise le produit de l'étape (c) pour former l'ester di(alkylique en C₁-C₆) de l'acide [2-((8,9)-dioxo-2,6-diazabicyclo[5,2,0]non-1(7)-én-2-yl)-éthyl]phosphonique bicyclique intermédiaire; et
e) on convertit l'ester di(alkylique en C₁-C₆) de l'étape (c) en l'acide phosphonique à produire.

2. Procédé selon la revendication 1, dans lequel les réactions des étapes (b), (c) et (d) sont effectuées in situ.

3. Procédé selon la revendication 1 ou 2, dans lequel la réaction de l'étape (b) est effectuée dans du méthanol ou de l'éthanol anhydre à température ambiante.

4. Procédé selon l'une quelconque des revendications 1 à 3, dans lequel la réaction de l'étape (c) est effectuée dans du chlorure de méthylène à -5° à 25°C.

5. Procédé selon l'une quelconque des revendications 1 à 4, dans lequel la réaction de l'étape (e) est effectuée dans du chlorure de méthylène ou de l'acétonitrile à environ 20°C.

6. Procédé selon l'une quelconque des revendications 1 à 5, dans lequel la 3,4-di(alcoxy en C₁-C₄)cyclobut-3-éne-1,2-dione est la 3,4-diéthoxycyclobut-3-éne-1,2-dione.

7. Procédé de préparation de l'ester di(alkylique en C₁-C₆) de l'acide N-[3-(t-butyloxycarbonylamino)propyl]-2-aminoéthylphosphonique, qui comprend la réaction d'un ester di(alkylique en C₁-C₆) de phosphonate de vinyle avec un ester 1,1-diméthyléthylique de l'acide 3-aminopropylcarbamique.

8. Procédé selon l'une quelconque des revendications 1 à 7, dans lequel la réaction avec l'ester di(alkylique en C₁-C₆) de phosphonate de vinyle est effectuée dans du méthanol anhydre à environ 20°C.

9. Procédé selon l'une quelconque des revendications 1 à 8, dans lequel l'ester di(alkylique en C₁-C₆) de phosphonate de vinyle est le phosphonate diméthylvinylique ou le phosphonate diéthylvinylique.

10. Procédé selon l'une quelconque des revendications 1 à 8, dans lequel l'ester di(alkylique en C₁-C₆) de l'acide N-[3-(t-butyloxycarbonylamino)-propyl]-2-aminoéthylphosphonique est l'ester diméthylique de l'acide N-[3-(t-butyloxycarbonylamino)-propyl]-2-aminoéthylphosphonique ou l'ester diéthylique de l'acide N-[3-(t-butyloxycarbonylamino)propyl]-2-amino-éthylphosphonique.

11. Composé qui est un ester di(alkylique en C₁-C₆) de l'acide N-[3-t-butyloxycarbonylamino)propyl]-2-aminoéthylphosphonique.

12. Composé d'ester diméthylique de l'acide N-[3-(t-butyloxycarbonylamino)propyl]-2-aminoéthylphosphonique ou composé d'ester diéthylique de l'acide N-[3-(t-butyloxycarbonylamino)propyl]-2-aminoéthylphosphonique.

13. Composé qui est un ester tert-butylique de l'acide 3-[[2-(di(alcoxy en C₁-C₆)phosphoryl)éthyl](2-(alcoxy en C₁-C₆)-3,4-dioxocyclobut-1-ényl)amino]propylcarbamique, où les groupes alcoxy sont identiques ou différents.

14. Composé d'ester tert-butylique de l'acide 3-[[2-(diéthoxyphosphoryl)éthyl]-(2-éthoxy-3,4-dioxocyclobut-1-ényl)amino]propylcarbamique.
